# EUROPEAN PATENT APPLICATION

(11) **EP 2 660 998 A2**
(43) Date of publication of application: **06.11.2013**
(21) Application number: 13163757.1
(22) Date of filing: 15.04.2013
(51) Int. Cl.: H04H 20/93, H04H 20/91

(54) **Broadcast receiving apparatus and method for controlling application, and device**

(30) Priority: 04.05.2012 GB 201207890; 20.03.2013 KR 20130029960
(71) Applicant: Samsung Electronics Co., Ltd., Gyeonggi-do 443-742 (KR)
(72) Inventor: Wells, Richard, Staines, Middlesex TW18 4QE (GB); Waller, Arthur Simon, Staines, Middlesex TW18 4QE (GB); Adam, John, Staines, Middlesex TW18 4QE (GB); Bencci, German, Staines, Middlesex TW18 4QE (GB)
(74) Representative: Bray, Richard Anthony

(57) **Abstract**

A broadcasting receiving apparatus capable of communicating with a secondary device includes a receiving module configured to receive application information relating to a selected program; and a control module configured to receive a control command from a control device, wherein the control module, in response to a predetermined control signal, controls the secondary device to execute an application identified by the application information, when the secondary device is registered in order to communicate with the broadcast receiving apparatus.

## Description

### CROSS-REFERENCE TO RELATED APPLICATIONS

This application claims priority under 35 U.S.C. §119(a) to U.K. Patent Application No. GB1207890.3, filed on May 4, 2012, in the United Kingdom Intellectual Property Office, and Korean Patent Application No. 10-2013-0029960, filed on March 20, 2013, in the Korean Intellectual Property Office, the disclosures of which are incorporated herein by reference.

### BACKGROUND

### 1. Field

The following description relates to launching an application on a secondary device. In particular, the following description relates to receiving application information at an apparatus for receiving a broadcast stream, and controlling the secondary device to launch the application identified by the application information if the secondary device has registered with the apparatus.

### 2. Description of the Related Art

In existing broadcast systems, such as Multimedia and Hypermedia Experts Group (MHEG) and Multimedia Home Platform (MHP), applications can be transmitted through a broadcast stream and executed by a receiver. The application may allow certain behavior to be triggered by user input, but this has to be programmed into the application itself. Accordingly, the application has to be executed in order for the functionality to be available to a user. The launching of the broadcaster application may be done either in direct response to some signaling, such as that defined in TS 102 809, or via a menu or other user interface (UI) provided by the manufacturer. Alternatively, a receiver may implement software that automatically runs applications provided by the broadcaster. Also, in recent years receivers have been developed which are able to communicate to secondary devices, such as smartphones, for example. However, at present, the scope for interaction between the receiver and secondary device is limited.

### SUMMARY

According to the present invention there is provided an apparatus and method as set forth in the appended claims. Other features of the invention will be apparent from the dependent claims, and the description which follows.

According to following description, an apparatus for receiving a broadcast stream may be arranged to communicate with a secondary device, and include a receiving module having the capacity to receive application information relating to a selected program through the broadcast stream, and a control interface having the capacity to receive control signals from a control device, wherein in response to a predetermined one of the control signals, the apparatus is arranged to control the secondary device to execute an application identified by the application information, if the secondary device has registered with the apparatus to receive communications from the apparatus.

The identified application may be a first application, and the apparatus may be arranged to only control the secondary device to execute the first application if the apparatus is currently executing a second application related to the first application.

The apparatus may be arranged to receive information from the secondary device about whether the secondary device is able to execute the identified application, and to only control the secondary device to execute the identified application if it is determined that the secondary device is able to execute the application.

The apparatus may be arranged to register the secondary device in response to a registration request received from the secondary device.

If the secondary device has registered with the apparatus, the apparatus may be arranged to periodically receive keep-alive messages from the secondary device to maintain a connection to the secondary device, wherein if no keep-alive message is received within a predetermined time after the last keep-alive message was received, the apparatus may be arranged to determine that the secondary device is no longer registered.

The application information may include version information defining a version of the identified application to be executed on the secondary device, and the apparatus may be arranged to transmit the version information to the secondary device.

The receiving module may be further configured to receive application data through the broadcast stream, the application data including an application identifier (ID) for identifying the application and additional data to be passed to the application, and the apparatus may be arranged to determine whether the secondary device is executing the application identified by the application ID, and transmit the application data to the secondary device if the secondary device is executing the identified application.

The selected program may be a recorded program stored on a storage module accessible by the apparatus, and the application information may be recorded application information that was received through the broadcast stream and recorded when the selected program was recorded.

According to the following description, a system may include the apparatus of any one of the preceding and the secondary device.

The secondary device may be arranged to register with the apparatus by transmitting a registration request to the apparatus.

The secondary device may be arranged to periodically transmit keep-alive messages to the apparatus after registering with the apparatus, to maintain a connection to the apparatus.

The application information may include an application identifier (ID) and a Uniform Resource Locator (URL), and the apparatus may be arranged to control the secondary device to execute the identified application by transmitting the application ID and URL to the secondary device, wherein the secondary device may include a network communication module for communicating with a network, and the secondary device may be arranged to determine whether the application identified by the application ID is already installed on the secondary device, and to connect to a network location identified by the URL through the network communication module to receive the application, if the application is not already installed.

The secondary device may be further arranged to receive version information from the apparatus, the version information defining a version of the application, and if the application is already installed, the secondary device may be arranged to determine that the installed version is out of date if the installed version is not the version identified by the version information or a more recent version, and to connect to the network location identified by the URL to receive an updated version if the installed version is out of date.

The apparatus may be arranged to transmit program information to the secondary device for identifying a program currently tuned in to the broadcast stream, and the secondary device may be arranged to select the application from a plurality of known applications based on the program information.

The apparatus may be arranged to obtain the program information from Electronic Program Guide (EPG) information received through the broadcast stream.

The secondary device may be arranged to determine whether to launch the application based on a proximity of the secondary device to the receiver.

The secondary device may include a microphone and/or camera and may be configured to record audio and/or video data during a predetermined time period, and to compare the recorded audio and/or video data to known audio and/or video data of a program currently being displayed on the receiver, to determine whether the secondary device is currently located in proximity to the receiver.

The secondary device may be arranged to receive the known audio and/or video data from the receiver or from an online database.

The apparatus may be configured to record the known audio and/or video data of the selected program during the predetermined time period, and send the known audio and/or video data to the secondary device. The secondary device may be arranged to determine a correlation value between the recorded audio and/or video data and the known audio and/or video data received from the apparatus, and launch the application, or register with the apparatus to receive information, if the correlation value is above a threshold value.

The secondary device may be configured to connect to the Internet to receive further information relating to the selected program.

The secondary device may be configured to transmit the further information relating to the selected program to the apparatus, and the apparatus may be configured to display the further information on a display.

When the information relating to the selected program is a telephone number, the secondary device may be configured to dial the received telephone number and/or send a text message to the received telephone number.

When the information relating to the selected program is an Internet Uniform Resource Locator (URL), the secondary device may be configured to receive an application from a location defined by the URL and execute the application, or connect to the location defined by the URL and display a webpage from the location on a display.

According to the following description, a device for receiving communications from an apparatus for receiving a broadcast stream may include a receiver interface module arranged to receive communications from the apparatus, and a control module arranged to identify a program currently selected by the apparatus in response to a command received from the apparatus through the receiver interface module, identify an application related to the identified selected program, and launch the identified application. The device may be a smartphone, tablet computer, or personal digital assistant (PDA), for example. The apparatus may be a receiver such as a TV or set-top box (STB). In an embodiment, the apparatus may not be a broadcast receiver, but may be any apparatus for reproducing audio/visual data, such as a Digital Versatile Disk (DVD) player.

The control module of the device may be arranged to identify the selected program by comparing audio and/or video data of the selected program to known audio and/or video data of a plurality of programs, or may be arranged to receive program information from the apparatus and identify the selected program based on the received program information. The program information can be included in the command received from the apparatus, or can be received separately. The program information may include a program identifier (ID) of the selected program, or information about the currently tuned channel and the current time to allow the program to be identified from an EPG. The device may be arranged to look up the program information in a storage module to identify the selected program, the storage module being arranged to store information for identifying a plurality of programs. The information for identifying a plurality of programs may include program identifiers for the plurality of programs, and/or EPG information about when each one of the plurality of programs is available through the broadcast stream. The storage module may be a local storage module included in the device. Alternatively, or additionally, the device may further include a network interface module for communicating with a remote storage module, such as an Internet server, for example, storing a database of program information. The control module can be arranged to transmit the received program information to the server and receive application information for identifying the application to be launched. Similarly, if audio and/or video data of the selected program is used, the known audio and/or video data of the plurality of programs may be stored locally or remotely.

A method for use in the device to identify and launch the application related to the selected program in the manner described above, and a computer-readable storage medium arranged to store a computer program which causes the device to perform the method, are also provided.

According to the following description, an apparatus for receiving a broadcast stream may communicate with a secondary device, and include a receiving module having the capacity to receive application information relating to a selected program, and a control interface having the capacity to receive control signals from a control device, wherein in response to a predetermined one of the control signals, the apparatus is arranged to control the secondary device to execute an application identified by the application information, if the secondary device has registered with the apparatus to receive communications from the apparatus. That is, the application information may be obtained from a source other than the broadcast stream.

According to the following description, a method of launching an application on a secondary device from an apparatus for receiving a broadcast stream, the apparatus being arranged to communicate with the secondary device and to receive control signals from a control device, may include receiving, at the apparatus, application information relating to a selected program, receiving, at the apparatus, a predetermined one of the control signals from the control device; and controlling the secondary device to execute an application identified by the application information, if the secondary device has registered with the apparatus to receive communications from the apparatus.

According to the following description, a method of launching an application on a secondary device from an apparatus for receiving a broadcast stream, the apparatus being arranged to communicate with the secondary device and to receive control signals from a control device, may include receiving, at the apparatus, application information relating to a selected program through the broadcast stream, receiving, at the apparatus, a predetermined one of the control signals from the control device, and controlling the secondary device to execute an application identified by the application information, if the secondary device has registered with the apparatus to receive communications from the apparatus.

The identified application may be a first application, and the secondary device may only be controlled to execute the first application if the apparatus is currently executing a second application related to the first application.

The method may further include receiving, at the apparatus, information from the secondary device about whether the secondary device is able to execute the identified application, wherein the secondary device may only be controlled to execute the identified application if it is determined that the secondary device is able to execute the application.

The method may further include, at the apparatus, prior to receiving the predetermined control signal, registering the secondary device in response to a registration request received from the secondary device.

If the secondary device has registered with the apparatus, the method may further include, at the apparatus, periodically receiving keep-alive messages from the secondary device to maintain a connection to the secondary device, and determining that the secondary device is no longer registered if no keep-alive message is received within a predetermined time after the last keep-alive message was received.

The application information may include version information defining a version of the identified application to be executed on the secondary device, and the method may further include transmitting the version information from the apparatus to the secondary device.

The method may further include receiving, at the apparatus, application data through the broadcast stream, the application data including an application identifier ID for identifying the application and additional data to be passed to the application, determining, at the apparatus, whether the secondary device is executing the application identified by the application ID, and transmitting the application data from the apparatus to the secondary device if the secondary device is executing the identified application.

The selected program may be a recorded program stored on a storage module accessible by the apparatus, and the application information may be recorded application information that was received through the broadcast stream and recorded when the selected program was recorded.

According to the following description, a computer-readable storage medium may be arranged to store a computer program which, when executed by an apparatus for receiving a broadcast stream, causes the apparatus to perform the method.

The method may further include transmitting a registration request from the secondary device to the apparatus to register the secondary device with the apparatus.

The method may further include periodically transmitting keep-alive messages from the secondary device to the apparatus after registering with the apparatus, to maintain a connection to the apparatus.

The application information may include an application identifier (ID) and a Uniform Resource Locator (URL), wherein controlling the secondary device to execute the identified application may include transmitting the application ID and URL from the apparatus to the secondary device and the secondary device may include a network communication module for communicating with a network, and the method may further include determining at the secondary device whether the application identified by the application ID is already installed on the secondary device, and connecting to a network location identified by the URL through the network communication module to receive the application, if the application is not already installed.

The method may further include receiving version information from the apparatus at the secondary device, the version information defining a version of the application, determining, at the secondary device, that the installed version is out of date if the installed version is not the version identified by the version information or a more recent version, and connecting to the network location identified by the URL to receive an updated version if the installed version is out of date.

The method may further include transmitting program information from the apparatus to the secondary device for identifying a program currently tuned in to the broadcast stream, and selecting the application from a plurality of known applications at the secondary device, based on the program information.

The method may further include obtaining the program information at the apparatus from Electronic Program Guide (EPG) information received through the broadcast stream.

The method may further include determining at the secondary device whether to launch the application based on a proximity of the secondary device to the receiver.

The secondary device may include a microphone and/or camera, and the method may further include recording audio and/or video data at the secondary device during a predetermined time period, and comparing the recorded audio and/or video data to known audio and/or video data of a program currently being displayed on the receiver, to determine whether the secondary device is currently located in proximity to the receiver.

The method may further include receiving the known audio and/or video data at the secondary device from the receiver or from an online database.

### BRIEF DESCRIPTION OF THE DRAWINGS

Embodiments of the present disclosure will now be described, by way of example only, with reference to the accompanying drawings, in which:
FIG. 1 illustrates a system including an apparatus for receiving a broadcast stream and a plurality of secondary devices connectable to the apparatus, according to an embodiment;
FIG. 2 illustrates the apparatus for receiving a broadcast stream of FIG. 1;
FIG. 3 illustrates the syntax of a second_device_descriptor() received through the broadcast stream, according to an embodiment;
FIG. 4 illustrates the syntax of a link_info() fragment received through the broadcast stream, according to an embodiment;
FIG. 5 illustrates the syntax of an activation_key_descriptor() received through the broadcast stream, according to an embodiment;
FIG. 6 illustrates a method for use in an apparatus for receiving a broadcast stream, according to an embodiment;
FIG. 7 illustrates a method for executing an application on a secondary device, according to an embodiment;
FIG. 8 illustrates a secondary device arranged to identify and launch an application in response to a command from a broadcast receiver, according to an embodiment; and
FIG. 9 illustrates a method of launching an application in a secondary device, according to an embodiment.

### DETAILED DESCRIPTION

Reference will now be made in detail to the embodiments, examples of which are illustrated in the accompanying drawings, wherein like reference numerals refer to the like elements throughout. The embodiments are described below to explain the present invention by referring to the figures.

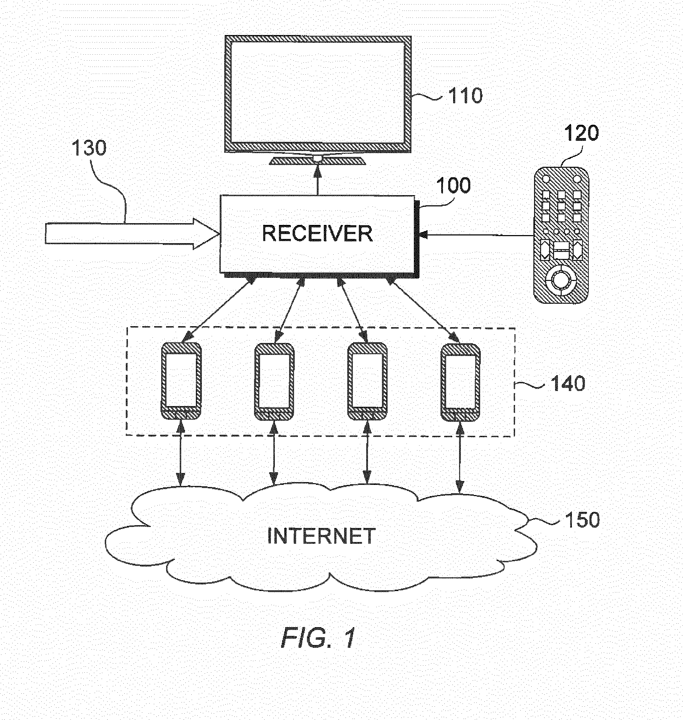

Referring now to FIG. 1, an apparatus for receiving a broadcast stream is illustrated, according to an embodiment of the present disclosure. In the present embodiment, the apparatus is a Digital Video Broadcasting (DVB) compliant receiver 100, which is connectable to a television 110 to display a program currently being received through the broadcast stream, and controllable by a remote control 120. The receiver 100 receives a broadcast stream 130 that includes a plurality of programs broadcast across a plurality of channels. The receiver 100 tunes to a particular channel to receive audio-visual data of a program currently being broadcast on that channel, decodes the audio-visual data to be displayed, and sends the decoded audio-visual data to the television 110 to be presented to a user. The user can control the receiver 100 using the remote control 120, such as to change the channel to which the receiver 100 is tuned, for example.

In the present embodiment, the remote control 120 may be similar to a conventional television remote control, and includes a plurality of keys which, when pressed by a user, cause the remote control 120 to transmit one of a plurality of control signals to the receiver 100. The control signal indicates which one of the keys was pressed. In another embodiment, instead of a plurality of keys, the remote control 120 may include a touchscreen for displaying a user interface having a plurality of user input regions. For example, instead of a dedicated remote control as shown in FIG. 1, the apparatus may receive the control signals from a mobile device such as a smart phone or tablet computer, for example.

Also, the receiver 100 may be connectable to one or more secondary devices 140, such as smart phones and/or tablet computers, for example, to send and receive information to/from the secondary devices. The receiver may, for example, connect to the secondary devices via a Wireless Local Area Network (WLAN), and each secondary device can be arranged to connect to the Internet 150. The receiver may receive target device information through the broadcast stream, which defines one or more devices on which an application is to be launched. The connections between each secondary device and the receiver 100 and Internet 150 may be wired or wireless. The secondary devices can also be configured to connect to a telephone network to initiate or receive telephone calls.

As well as the broadcast program audio-visual data, the receiver 100 also receives application information through the broadcast stream. The application information can be any information that identifies an application to be launched on the secondary device 140. For example, the application information can be a Uniform Resource Locator (URL) to identify a network location, e.g. a web server, from which the application can be downloaded. Alternatively, the application information could be other information such as an application_id included in an Application Information Table (AIT) as defined in ETSI TS 102 809. The receiver 100 is arranged to respond to a predetermined one of the control signals by controlling the secondary device to execute an application identified by the application information, if the secondary device has registered with the apparatus to receive communications from the apparatus.

Furthermore, in some instances the application may only be launched if other parameters are met. For example, a first application to be run on the secondary device may be reliant upon a second application running on the receiver. This could be the case where multiple secondary devices are provided to allow a plurality of users to participate in an interactive quiz, with their scores being transmitted to and collated by the receiver. In this embodiment, a master application is executed by the receiver to collate and display scores received from client applications running on the secondary devices. The receiver can extract application data from the broadcast stream to be passed to the master application. An example of application data for a quiz application could be a question relating to the program currently being broadcast, in which case the question text is received through the broadcast stream and displayed on the TV screen by the master application. Application data received through the broadcast stream can also be passed to the client applications on the secondary devices, for example a plurality of multiple-choice answers to the displayed question can be received and sent to the secondary devices. The client application on each secondary device can be configured to receive the application data, i.e. the answers, display the answers on a display of the secondary device to allow a user to select one of the answers, and transmit data indicating which answer was selected back to the receiver. The master application can determine each user's score based on the selected answer received from their secondary device, and display the current scores on the TV. The master application could also be configured to apply a time limit in which answers have to be received.

In an embodiment, the application to be launched is a plug-in to a container application which can only be launched if the container application is already being executed by the secondary device. In this case the receiver can be arranged to send a query to the secondary device to establish whether the required container application is currently running, and to receive a response from the secondary device indicating whether the container application is running. If the container application is running, then the receiver controls the secondary device to launch the identified plug-in application.

Also, in some embodiments, the receiver may be configured to determine whether or not to control the secondary device to execute an application, based on information received from the secondary device about whether or not it is capable of executing the application. For instance, applications of a plurality of different types may be signaled through the broadcast stream, different types being authored using different programming languages. A secondary device may only be capable of running applications of a particular type or types. Therefore, the application information received through the broadcast stream can also indicate the type of the application, and the receiver can send information about the application type to the secondary device. If the secondary device responds that it is able to execute applications of that type, the receiver controls the secondary device to launch the application, and if not, then the application is not launched. Alternatively, when the secondary device registers with the receiver it can also transmit information about which application types it is compatible with, and the receiver can store a record of compatible application types for each registered secondary device. This approach avoids the need to query the secondary device each time an application is to be launched.

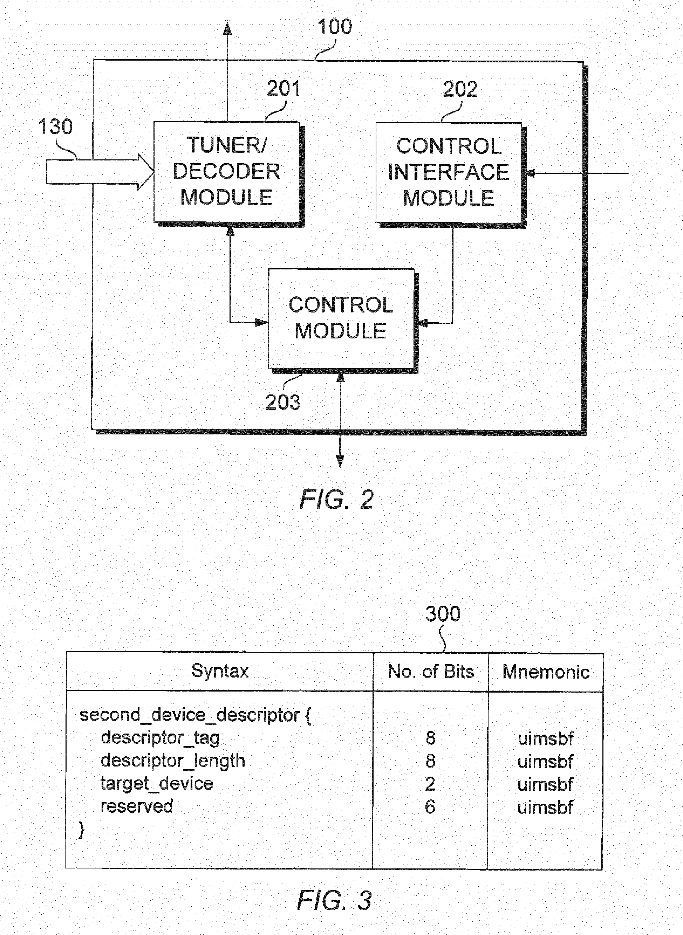

A structure of the receiver 100 is illustrated in FIG. 2. As shown in FIG. 2, in the present embodiment, the receiver 100 includes a tuner/decoder module 201, control module 202, and control interface module 203. The structure shown in FIG. 2 is exemplary only, and the present disclosure is not limited to this structure. The modules may be physically separate, or may, for example, be implemented as software modules executed on a processor. In other embodiments, the functionality of the various modules shown in FIG. 2 may be combined into or divided amongst one or more other modules, as required.

In the present embodiment, the tuner/decoder module 201 is configured to receive and demodulate the broadcast stream 130, tune to a selected channel, and decode the audio-visual data of a program currently being broadcast on the tuned channel. The tuner/decoder module 201 then sends the decoded audio-visual data to the television 110. In addition, the tuner/decoder module 201 is configured to extract metadata from the broadcast stream 130, including the application information, and send the application information to the control module 102.

Also, the predetermined control signal may be a control signal corresponding to a predetermined key of the remote control, such as a "RED" key, for example. However, in other embodiments, the predetermined control signal can be defined by the broadcaster using key information received through the broadcast stream. In such embodiments, the key information can be extracted from the broadcast stream by the tuner/decoder module 101. The key information identifies one of the plurality of control signals receivable from the remote control 120. The tuner/decoder module 101 can be configured to send the key information to the control module 102 in addition to the application information.

The receiver 100 can control the secondary device to execute the application by forwarding the application information to the secondary device. For example, a new Universal Plug and Play (UPnP) Digital Living Network Alliance (DLNA) profile can be created to enable application information such as a web URL or application ID to be pushed to one or more of the secondary devices 140 from the receiver 100. This profile may allow application information received by the receiver 100, such as URL information received through the broadcast stream, for example, to be pushed to the secondary devices 140 on an ad-hoc basis. The receiver 100 may determine whether the secondary device is registered with the receiver 100 in order to receive data, and if the secondary device is registered, the receiver 100 may pass the URL to the secondary device in UPnP packets. The secondary device may be configured to connect to the URL contained in the received UPnP data packet, to execute a web-based application. Alternatively, if the secondary device 140 receives an application ID from the receiver 100, the secondary device can launch the identified application directly. If the identified application is not installed, the secondary device can be arranged to connect to the Internet 150 to download the application.

Although in the present embodiment, UPnP packets are used to transmit data between the receiver 100 and secondary devices 140, in other embodiments, other data transfer protocols may be used.

As well as the application information, the receiver can also receive secondary device information through the broadcast stream. Referring now to FIG. 3, the syntax of a second_device_descriptor() received through the broadcast stream is illustrated, according to an embodiment of the present disclosure.

The second_device_descriptor() 300 includes conventional descriptor_tag and descriptor_length fields. The second_device_descriptor() 300 further includes a target_device field of two bits, and a reserved field of six bits. In the present embodiment, the target_device contains a value that denotes which device or devices a web-based application is to be executed on. In more detail, as an example, a value of "00" may be reserved for future use, a value of "01" may indicate that the application should be executed only on the receiver itself, a value of "10" may indicate that the application should be executed only on the secondary device or devices, and a value of "11" may indicate that the application may be executed on the receiver and/or the secondary device. The target device information may be used as an indicator of whether or not the application is suitable for, i.e. authored in such a way as to make editorial sense, the receiver itself or the secondary device.

By using the second_device_descriptor() 300, the broadcaster can indicate an intention for the application. For example, the application may be designed to be displayed alongside or on top of the broadcast video and interact with the broadcast video, in which case the application should only be run on the receiver. Alternatively, the application might obscure the video if executed on the receiver, in which case the application should only be run on a secondary device. As a further option, the application may be suitable for executing on either device, such as if the application is designed to adapt its behavior depending on the device on which it is executed, for example. As described above, when a second_device_descriptor() indicates that the application should be executed on a secondary device, the receiver may only control the secondary device to execute the application if the secondary device has registered with the receiver.

Also, in cases where the second_device_descriptor() 300 indicates that the application is only suitable for executing on a secondary device, the receiver may not itself execute the application, but may instead display an icon on the display in order to inform a user of the availability of the application. The application may be launched on the secondary device using a remote control key identified by the key information, or using a different predetermined key.

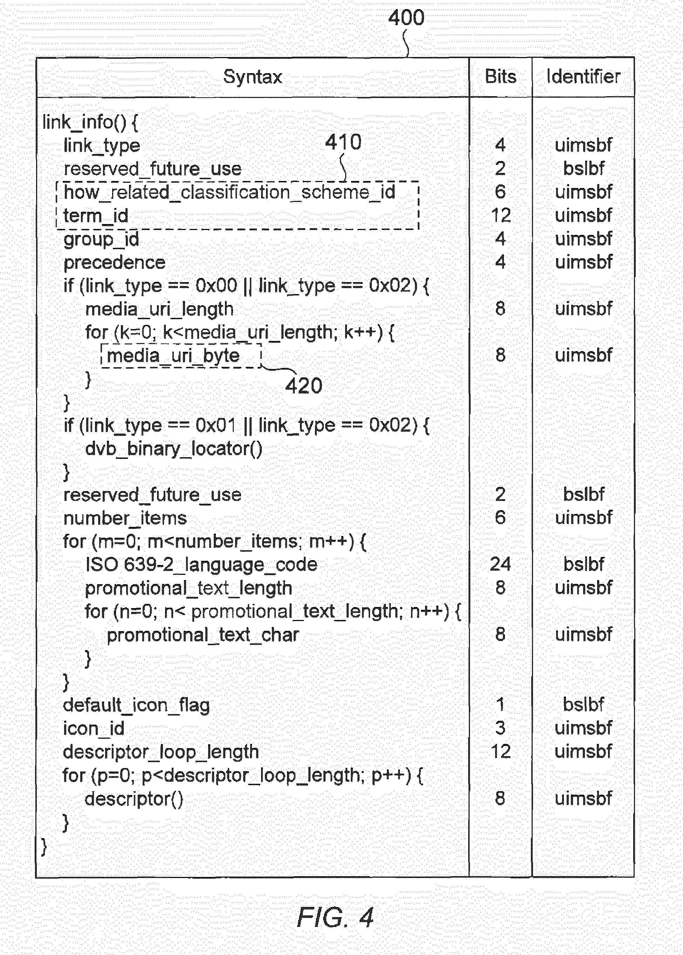

Referring now to FIG. 4, the syntax of a link_info() fragment received through the broadcast stream is illustrated. The link_info() fragment 400 may be used in some embodiments to send the application information through the broadcast stream, when the receiver is a DVB-compliant receiver. The link_info() structure is defined in detail in ETSI TS 102 822-3-1, and as such a detailed description will be omitted here to maintain brevity.

In the present embodiment, the term_id and how_related_classification_scheme_id fields 410 define the type of application information being provided and its relationship with the current content. Specifically, different classification schemes may be used, and the how_related_classification_scheme_id field defines the scheme that is currently being used. The term_id contains a code defining the type of application information being provided, and is interpreted using the classification scheme specified in the how_related_classification_scheme_id field. The application information, such as a URL identifying a server from which the application can be downloaded, for example, may be carried in the media_uri_byte field 420 or in a separate descriptor. For instance, additional information relating to a selected program may be received that includes link information of the type "URL of web application". Here, the receiver may forward the URL to the secondary device, which can navigate to the specified URL, i.e. the URL contained in the link information, and execute a web-based application received from the URL.

Additionally, a broadcaster may use the additional information included in the link_info() fragment to signal how and when the selected function should be performed. For example, a receiver may be configured to only control the secondary device to execute the application during a period when the link information is available in the RCT. That is, the application may only be launched while the link information still exists in the RCT being received through the broadcast stream.

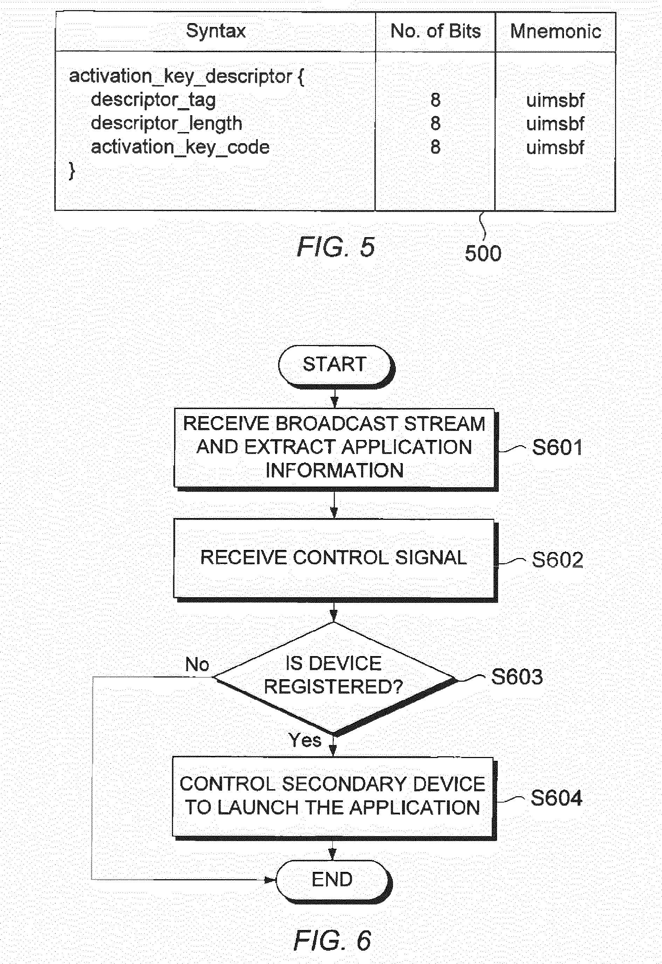

Also, as described above, the broadcast can define the trigger that the receiver should use to launch the web application, by including key information in the broadcast stream to dynamically define a key to which the receiver will respond by controlling the secondary device to launch the application. The key information will now be described in more detail with reference to FIG. 5.

Referring now to FIG. 5, the syntax of an activation_key_descriptor() received through the broadcast stream is illustrated. In the present embodiment, a receiver is configured to receive the key information in the activation_key_descriptor() 500 shown in FIG. 5, although in other embodiments other formats may be used.

The activation_key_descriptor() 500 includes descriptor_tag and descriptor_length fields, which are standard fields used in all descriptors following the DVB standard. The descriptor_tag field is a unique value that identifies this descriptor as an activation_key_descriptor, while the descriptor_length field specifies the number of bytes that follow the descriptor_length field. The activation_key_descriptor further includes an activation_key_code field, which contains a value that identifies one of a plurality of control signals. In embodiments where the control signals are received from a remote control including a plurality of keys, each value corresponds to one of the keys of the remote control.

In more detail, a conventional television remote control includes RED, GREEN, YELLOW, and BLUE keys. Of these, the RED key is normally used for interactive TV services and the BLUE key for audio selection. The yellow and green buttons are unused during normal TV reception and are therefore available for other actions. The value contained in the activation_key_code field indicates to which key the receiver should respond by performing the selected function. As an example, a value of "0x01" may correspond to the RED color key, a value of "0x02" may correspond to the GREEN color key, a value of "0x03" may correspond to the YELLOW color key, a value of "0x04" may correspond to the BLUE color key, and values of "0x00" and "0x05"-"0xFF" may be reserved for future use. These values and keys are given by way of example only, and the present disclosure is not limited to this particular arrangement.

In an embodiment, the receiver may be configured to monitor the RCT for application information. It will also look for the activation_key_descriptor to determine which control signal should be used to launch the identified application. When application information is available, the receiver may be configured to display an icon on the display to inform a user of the presence of the application. The particular icon to be used can be signaled as part of the RCT. Then when the user presses the remote control key identified in the activation_key_code field, the receiver is configured to respond by controlling the secondary device to launch the application.

Referring now to FIG. 6, a method for use in an apparatus for receiving a broadcast stream is illustrated according to an embodiment of the present disclosure. The method may be suitable for use in a receiver such as the one shown in FIGS. 1 and 2. In operation S601, the apparatus receives a broadcast stream. This may include starting to receive a broadcast stream, or continuing to receive a broadcasting stream. The receiver also extracts application information from the broadcast stream. In operation S602, a predetermined control signal is received. For instance, the control signal may be defined by key information received through the broadcast stream, or may be another predetermined control signal. In operation S603, the receiver responds to the control signal by determining whether the secondary device has registered with the receiver to receive communications. If the secondary device has not registered, the application cannot be launched and the process ends. If, however, the secondary device has registered, in operation S604, the receiver controls the secondary device to launch the application.

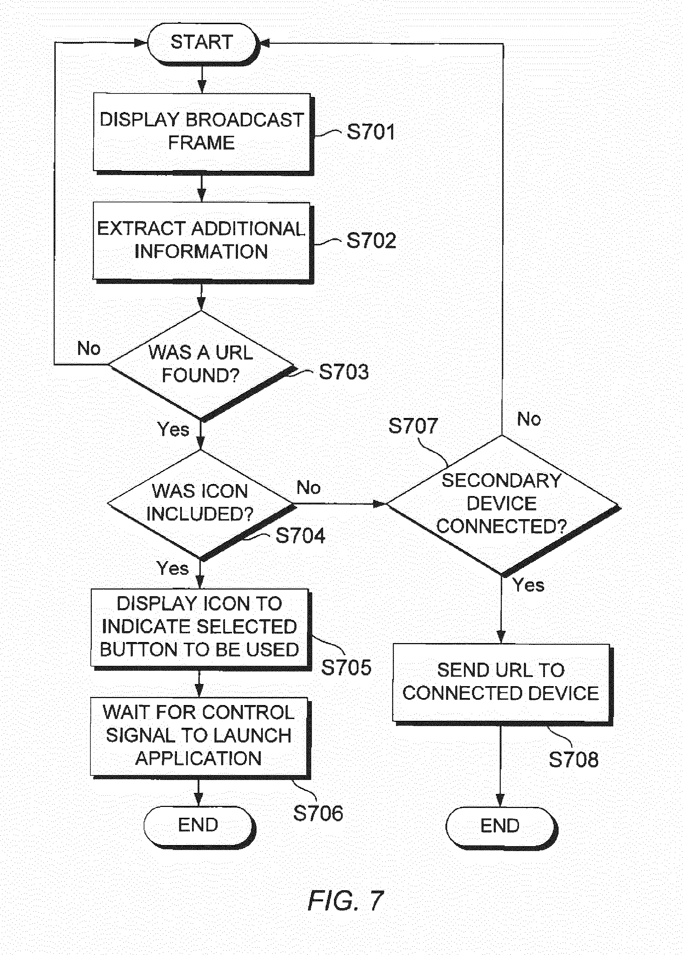

Referring now to FIG. 7, a method for executing an application on a secondary device is illustrated, according to an embodiment of the present disclosure. The method may be suitable for use in an apparatus such as the receiver of Figs. 1 or 2, which is connectable to one or more secondary devices. The method can be used to determine whether to launch the application automatically or in response to user input.

In operation S701, a broadcast frame of a currently selected program is displayed. In operation S702, additional information is extracted from the broadcast stream. The additional information may include link information, and information about the type of link information that is available. The order of operations S701 and S702 may be reversed in some embodiments. In operation S703, it is determined whether the link information included application information in the form of a URL. If a URL was not found, the receiver returns to operation S701 and displays the next broadcast frame. If a URL was found, the receiver proceeds to operation S704 and determines whether an icon was also found in the link information. An icon may be provided by the broadcaster if key information is included in the broadcast stream, and should correspond to the remote control key identified by the key information. In embodiments where key information is omitted, i.e. where another predetermined control signal is used to launch the application, the icon may also be omitted and the process may proceed directly to operation S707.

If an icon was found, it is assumed that the application is only to be executed in response to user input. In this case, the receiver proceeds to operation S705 and displays the icon. Here, the icon may, for example, be an image of the button which is to be used to launch the application. In other embodiments, other visual information instead of an icon, such as a textual description of the button, for example, may be received from the broadcaster. The visual information allows a user to identify the button that has been specified by the key information, so that the user knows which button to press in order to launch the application. In operation S706, the receiver waits for the control signal corresponding to the specified key, i.e. the key identified by the key information and to which the visual information corresponds. If the control signal is received, then the apparatus proceeds as in operations S603 and S604 of FIG. 6, to determine whether the secondary device is registered so that the application can be launched.

If no icon was found at operation S704, it is assumed that the application is to be automatically executed on the secondary device without user input. In this case, the receiver proceeds to operation S707 and determines whether a secondary device is connected, i.e. registered with the receiver to receive data. If no secondary device is connected, it is not possible to launch the application, and so the receiver returns to the beginning. However, if a secondary device is connected, the receiver proceeds to operation S708, and sends the URL to the secondary device, which may be configured to automatically navigate to the URL to receive the application, and execute the application. In situations where a plurality of secondary devices are connected, the receiver may transmit the URL to all connected devices, or may select one or more of the devices to which the URL should be sent.

In the embodiment of FIG. 7, a method is described in relation to executing a web-based application received from a location specified by a URL. However, in other embodiments a similar method may be used for different types of application information, such as an application ID identifying a pre-installed application on the secondary device, for example.

In embodiments of the present disclosure in which secondary devices are able to connect to a receiver to receive information relating to a program currently being displayed, each secondary device may be configured to register with the receiver in order to receive information. In some embodiments, each secondary device may be arranged to transmit a registration request to the receiver in order to register. Once the registration request is received, the receiver registers the secondary device. Then, the secondary device can periodically broadcast keep-alive messages at predetermined intervals to maintain the connection to the receiver. If the receiver does not receive a keep-alive message within the predetermined interval after the registration request, or the previous keep-alive message was received, the receiver determines that the secondary device is no longer within range and de-registers the secondary device. In other embodiments, however, the secondary device may remain registered until it transmits a de-registration request.

Also, each device may only register with the receiver if it determines that it is currently within the vicinity of the television, such that a user of the secondary device is likely to be viewing and/or listening to the program. To determine whether it is in the vicinity, each secondary device may execute an automatic recognition procedure.

In more detail, the secondary device may include a microphone and/or camera. The apparatus can record audio and/or video data of the selected program during a predetermined time period, which may be referred to as known audio and/or video data. The known audio and/or video data is sent to the secondary device. Next, or at the same time, the secondary device may itself record audio and/or video data during a time period corresponding to the predetermined time period. The secondary device can then determine a correlation value between the recorded audio and/or video data and the known audio and/or video data received from the apparatus, and register with the apparatus to receive information if the correlation value is above a threshold value. Filtering may be applied to the recorded audio and/or video data before obtaining the correlation value.

In other embodiments, the known audio and/or video data may be received from another source, such as from a server storing an online database, for example. The secondary device may receive program information from the apparatus for identifying the program currently being reproduced, i.e. the selected program. In this embodiment, the secondary device can use the program information to request the known audio and/or video data of the selected program from the online database. The program information may, for example, be obtained by the apparatus from Electronic Program Guide (EPG) information.

Program information can also be used to determine which application to launch on the secondary device. For example, the secondary device may be arranged to launch a plurality of predefined applications, each corresponding to a different broadcast program. In this case, the application information may simply take the form of a program identifier along with a signal to indicate that an application associated with the program is available. The receiver can control the secondary device to launch the application by transmitting the program identifier, which can be used by the secondary device to select and launch the appropriate application.

Embodiments have been described in which an application is launched on a secondary device by transmitting application information in the form of a URL to the secondary device, so that the secondary device can connect to the URL to launch the application. In other embodiments, however, the application information may be received as an application identifier (ID). For example, the secondary device can be pre-installed with a plurality of applications, and the application can be launched by transmitting an application identifier (ID) to the secondary device to enable the required application to be identified from the plurality of applications. If the secondary device does not have the identified application installed, it may connect to the Internet to download the application.

Also, in some embodiments the application information may include version information for identifying a version of the application to be launched. The receiver can send the version information to the secondary device, and the application may only be launched if the secondary device has the required version. For instance, if a version of the application is installed, the secondary device may compare the version information to the installed version to determine whether to launch the application. If the installed version is out-of-date, i.e. is an older version than that identified by the version information, the secondary device may connect to the Internet to obtain an updated version of the application. In some embodiments, the version information may identify an older version of the application, and the secondary device may be arranged to only launch that specific version rather than a more up-to-date version. This may be desirable when, for example, different versions correspond to different episodes of a particular series. If a user is currently watching a re-run of an older episode, the version to be launched should be the older version corresponding to that episode, rather than a more up-to-date version corresponding to the most recently broadcast episode. In some embodiments, an umbrella application may be provided that includes different containers to be updated for different programs/episodes, and the version information can be used to identify the particular container version corresponding to the currently selected episode. This approach can avoid the need to download and install an entirely new version of the application every time a different episode is viewed.

Embodiments of the present disclosure have been described in relation to launching an application corresponding to a program currently being received through the broadcast stream. However, in other embodiments the selected program may be a recorded program, i.e. a program that has previously been recorded on a storage module accessible by the receiver, such as an internal or external hard disk drive (HDD). Application information received through the broadcast stream when the program was originally received and recorded can also be stored, along with the recorded program. Such embodiments can ensure that the correct application is launched on the secondary device even when the user is viewing a recorded program. Other aspects of the present disclosure may equally be applied to recorded programs. For example, comparison of audio/video data recorded by the secondary device can still be used to identify the program being viewed. If the known audio/video data to be compared is obtained from an online database, the online database should be arranged to store the known data for previously broadcast programs as well as for programs currently being broadcast.

Furthermore, application data may be received through the broadcast stream, the application data including the application ID and additional data to be passed to the application. The receiver may check whether the secondary device is executing the application identified by the application ID, and if the application is being executed, the additional data can be transmitted to the secondary device to be passed to the application.

Embodiments of the present disclosure have been described in which a web URL is signaled in a link_info() fragment. However, in other embodiments, a web URL or other information could be signaled in the Application Information Table (AIT) defined in ETSI TS 102 809. In this case, key information could also be added to the AIT if required, such as using the activation_key_descriptor, for example.

Although embodiments of the present disclosure have been described with relation to a DVB-compliant receiver, the present disclosure may be generally applicable to any apparatus suitable for receiving a broadcast stream. The apparatus may be separate from the display, such as a set-top box or personal video recorder, for example, or may be included in the display. In some embodiments, the apparatus may be included in a mobile device, such as a tablet computer or a mobile telephone handset, for example, or in another personal computer such as a desktop or laptop.

Also, embodiments of the present disclosure have been described in which an apparatus receives control signals from a remote device, such as a remote control, smartphone, or tablet computer. However, in certain other embodiments, the apparatus itself may include user input means, such as a plurality of keys or a touchscreen. In such embodiments, the control signals may be generated internally within the apparatus when a user manipulates the user input means.

Additionally, embodiments of the present disclosure have been described in which metadata relating to a program currently being displayed is extracted from the broadcast stream. The metadata includes the application information and can include other information, such as version information and application data. However, in other embodiments, metadata may be extracted which relates to any selected program, which may or may not be the program currently being displayed. For example, while one program is being displayed, the user may select a different program in an electronic program guide (EPG). The receiver may then launch the application identified by the metadata for the selected program.

Furthermore, although embodiments of the present disclosure have been described in relation to a DVB-compliant system, other embodiments of the present disclosure may be implemented according to a different standard, such as a digital video broadcasting (DVB) standard, Open IPTV Forum (OIPF) standard, or Digital Entertainment Content Ecosystem (DECE) standard, for example.

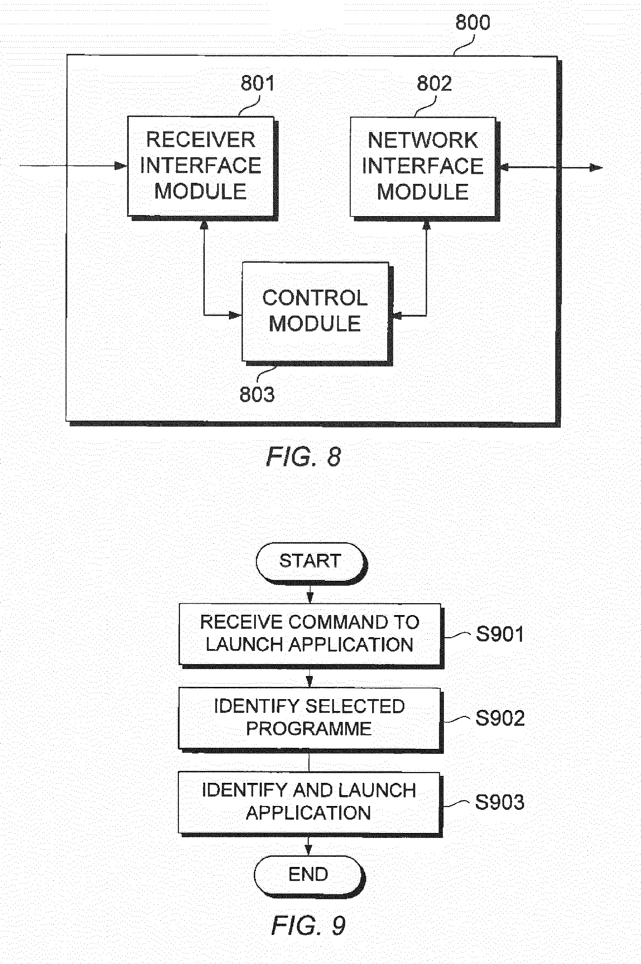

Finally, embodiments of the present disclosure have been described in relation to receiving application information through the broadcast stream to identify the application to be launched. In other embodiments, however, the application to be launched may be identified by other means than information transmitted through the broadcast stream. In certain embodiments, the identification of an application to be launched for a currently selected program can be performed by the secondary device. A secondary device arranged to identify and launch an application in response to a command from a broadcast receiver is illustrated in FIG. 8, according to an embodiment of the present disclosure.

As shown in FIG. 8, the secondary device 800 includes a receiver interface module 801 arranged to receive communications from the broadcast receiver, such as the receiver 100 of FIGS. 1 and 2, for example. The secondary device 800 also includes a control module 803 for identifying and launching applications, and a network interface module 802 for communicating with a network, such as the Internet or a local network. In response to a command to launch an application for the selected program, the receiver interface module 801 instructs the control module 803 to attempt to identify an application relating to the selected program. In the present embodiment, the command received from the broadcast receiver includes a program identifier, and the control module 803 is arranged to send the program identifier to a network server via the network interface module 802. The control module 803 receives a response from the server about whether an application for the selected program is available, the response identifying the application if one is available. The control module 803 then launches the identified application, which could for example be an installed application, an application to be downloaded, or a container to be used within another application.

In other embodiments, a secondary device can identify the selected program without using a program identifier. For instance, the secondary device can receive A/V data from the receiver or record A/V data itself, and compare the A/V data to extracts for a plurality of programs (e.g. stored locally or remotely) to identify the selected program currently being displayed. Alternatively, the receiver can transmit other types of program information such as EPG information relating to the selected program, such as information about the currently tuned channel and the current time, to the secondary device for use in identifying the selected program. Also, in some embodiments, the network interface module 802 could be omitted and the necessary database information to allow the application to be identified could be stored locally within the device 800.

A method of launching an application in a secondary device is illustrated in FIG. 9, according to an embodiment of the present disclosure. In operation S901, the device receives a command from a broadcast receiver to launch an application related to the selected program. In operation S902, the device attempts to identify the selected program, such as a program identifier or EPG information received from the broadcast receiver, for example, or by comparing A/V data of the selected program to known A/V extracts as described above. If the selected program is identified, in operation S903, the corresponding application is launched, if one is available. The application can be identified as described above, for example by querying a local or remote server. Embodiments such as those described here with reference to Figs. 8 and 9 can allow a secondary device to identify and launch an application even when application information is not received through the broadcast stream. Such embodiments can also be used in scenarios when a broadcast stream is not currently being received, such as when the selected program is a recorded program or when the apparatus from which commands are received is not a broadcast receiving apparatus, but is another type of video reproducing apparatus, such as a DVD player, for example.

The above-described embodiments may be recorded in computer-readable media including program instructions to implement various operations embodied by a computer. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. The computer-readable media may also be a distributed network, so that the program instructions are stored and executed in a distributed fashion. The program instructions may be executed by one or more processors. The computer-readable media may also be embodied in at least one application specific integrated circuit (ASIC) or Field Programmable Gate Array (FPGA), which executes (processes like a processor) program instructions. Examples of program instructions include both machine code, such as produced by a compiler, and files containing higher level code that may be executed by the computer using an interpreter. The above-described devices may be configured to act as one or more software modules in order to perform the operations of the above-described embodiments, or vice versa.

While certain embodiments of the present invention have been described above, the skilled person will understand that many variations and modifications are possible without departing from the scope of the invention as defined by the accompanying claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcasting receiving apparatus capable of communicating with a secondary device, the apparatus comprising:
a receiving module configured to receive application information relating to a selected program; and
a control module configured to receive a control command from a control device,
wherein the control module, in response to a predetermined control signal, transmits a control signal to the secondary device for executing an application identified by the application information, when the secondary device is registered in order to communicate with the broadcast receiving apparatus.

2. The apparatus of claim 1, wherein the identified application is a first application, and
wherein the control module controls the secondary device to execute the first application, when the broadcasting receiving apparatus executes a second application relating to the first application.

3. The apparatus of claim 1 or 2, wherein the control module receives information from the secondary device about whether the secondary device is able to execute the identified application, and controls the secondary device to execute the identified application, when it is determined that the secondary device is able to execute the identified application.

4. The apparatus of any one of claim 1 to 3, wherein the control module registers the secondary device in response to a registration request signal received from the secondary device.

5. The apparatus of claim 4, wherein the control module, when the secondary device is registered, periodically receives keep-alive messages from the secondary device to maintain communication with the secondary device, wherein if no keep-alive message is received within a predetermined time after a previous keep-alive message was received, the control module determines that the secondary device is deregistered.

6. The apparatus of any one of claim 1 to 5, wherein the application information includes version information defining a version of the identified application to be executed on the secondary device,
wherein the control module transmits the version information to the secondary device.

7. The apparatus of any one of claim 1 to 6, wherein the receiving module receives application data through a broadcast stream, and the application data includes an application ID for identifying an application and additional data to deliver an application,
wherein the control module determines whether the secondary device executes an application identified by the application ID, and transmits application data to the secondary device, when the secondary device executes the application identified by the application ID.

8. The apparatus of any one of claim 1 to 7, wherein the selected program is a recorded program stored on a storage module accessible by the broadcast receiving apparatus, and
wherein the application information is one of recorded information that is received through a broadcast stream and information that is recorded, when the selected program is recorded.

9. A method for controlling an application in a broadcast receiving apparatus capable of communicating with a secondary device, the method comprising:
receiving application information relating to a selected program;
receiving a predetermined control command from a control device; and
when the secondary device is registered to communicate with the broadcast receiving apparatus, in response to the predetermined control signal, transmitting a control signal to the secondary device for executing an application identified by the application information.

10. The method of claim 9, wherein the identified application is a first application, and
wherein when the broadcasting receiving apparatus executes a second application relating to the first application, the controlling comprises controlling the secondary device to execute the first application.

11. The method of claim 9 or 10, wherein the controlling comprises:
receiving information from the secondary device about whether the secondary device is able to execute the identified application; and
controlling the secondary device to execute the identified application, when it is determined that the secondary device is able to execute the identified application.

12. The method of any one of claim 9 to 11, further comprising:
registering the secondary device in response to a registration request signal received from the secondary device.

13. The method of claim 12, further comprising:
when the secondary device is registered, periodically receiving keep-alive messages from the secondary device to maintain communication with the secondary device; and
wherein if no keep-alive message is received within a predetermined time after a previous keep-alive message is received, determining that the secondary device is deregistered.

14. The method of any one of claim 9 to 13, wherein the application information comprises version information defining a version of the identified application to be executed on the secondary device,
the method further comprising:
transmitting the version information to the secondary device.

15. The method of any one of claim 9 to 14, wherein the receiving comprises receiving application data through a broadcast stream,
wherein the application data includes an application ID for identifying the application and additional data to deliver an application,
wherein the controlling comprises determining whether the secondary device executes an application identified by the application ID, and transmitting application data to the secondary device, when the secondary device executes the application identified by the application ID.
